# EUROPEAN PATENT SPECIFICATION

(11) **EP 3 770 498 B1**
(45) Date of publication and mention of the grant of the patent: **10.05.2023**
(21) Application number: 19425054.4
(22) Date of filing: 22.07.2019
(51) Int. Cl.: F23Q 3/00, F23D 14/38, A01M 15/00, F23D 14/52

(54) **PORTABLE GAS TOOL**
TRAGBARES GASWERKZEUG
OUTIL PORTABLE AU GAZ

(43) Date of publication of application: 27.01.2021
(73) Proprietor: Gnali Bocia S.r.l., 25065 Lumezzane (Brescia) (IT)
(72) Inventor: Gnali, Luigi, 25065 Lumezzane (BS) (IT); Gnali, Gianbattista, 25065 Lumezzane (BS) (IT); Gnali, Andrea, 25065 Lumezzane (BS) (IT)
(74) Representative: Biesse S.r.l.

(56) References cited:
- EP-A1- 2 522 904
- DE-U1- 29 622 544
- DE-U1-202013 002 971
- FR-A1- 2 764 969
- GB-A- 2 073 397
- JP-A- 2014 119 248
- US-A- 4 954 078
- US-A1- 2008 171 295
- US-A1- 2009 075 221

## Description

### Field of the invention

The invention concerns a portable gas tool, used, for example, to burn weeds from boulevards, terraces, walkways, to incinerate nests of insects, to defrost pipes and to carry out similar maintenance and gardening works.

### State of the art

In the sector of portable gas tools, used, for example, to burn weeds from boulevards, terraces, walkways, to incinerate nests of insects, to defrost pipes and to carry out similar maintenance and gardening works, those using a piezoelectric system to ignite the gas are known.

The aforesaid tools, often named weed burners, *bioflamme* or also thermal herbicides, essentially comprise a handle grip, a tap to which a gas tank is combined, a blowpipe with a first end in communication with the tap and a burner placed at a second end of the blowpipe distal from the handle grip.

In particular, according to a first embodiment, the known art provides tools of the aforesaid type wherein the piezoelectric system comprises an ignition device placed at the burner.

In detail, in such first embodiment, the gas tool comprises a head house mounted on the blowpipe in which the ignition device is housed - which, in practice, is a button that can be activated from the outside of the head house - and inside which a typical spark plug for piezoelectric systems is arranged and which, when biased via the button, allows the gas to be ignited and thus the generating of a flame inside the burner.

Disadvantageously, an ignition device placed in proximity of the burner, in which, in practice, the button is housed in a position distal from the handle grip of the tool, is uncomfortable for a user due to the distance of the button from the handle grip.

Disadvantageously still, the presence of the head house makes the assembling and disassembling operations of the tool laborious and costly.

Moreover, the head house appears like a foreign body with respect to the blowpipe and, thus, such a solution is not well appreciated from an aesthetic point of view.

In order to at least partly overcome the disadvantages mentioned above, the known art provides a second embodiment of tools of the aforesaid type, wherein an igniting command of the piezoelectric system is placed in proximity of the handle grip.

In this case, the tool comprises a stick extended between the igniting command, i.e. the button operated by the user, and a first head house placed in proximity of the burner in which the spark plug is arranged.

The button is thus operable on the aforesaid stick, which in practice is a sort of slider sliding outside of and substantially parallel to the blowpipe of the tool, whereas an end of the stick opposite the button is operable on the spark plug.

Although the tools with igniting command proximal to the handle grip are more comfortable to use with respect to those having the ignition device in proximity of the burner, it should be said that they are not devoid of drawbacks either, among which high production and assembly cost.

In fact, in addition to the aforesaid first head house housing the spark plug, in this second embodiment, the gas tool further comprises a second supporting head house arranged between the button and the first head house, which holds the slider stick in guide.

Moreover, this second embodiment is also not well appreciated from an aesthetic point of view due to the stick which surmounts the blowpipe.

Moreover, the user must apply a relevant force on the button to overcome the resistance made by the sliding stick, in order to exert the necessary pressure on the spark plug.

Document GB 2 073 397 A discloses a hand-held gas fuelled heating appliance, typically a blowtorch, having a handle assembly and a burner assembly, in which the handle assembly includes a duct for fuel and a piezoelectric actuator for energising a spark ignition device at or near the rear end of the burner assembly, there being a mixing chamber in said rear end in which the gas fuel is mixed with air to pass along a passage to the burner head.

Document JP 2014 119248 A discloses a piezoelectric ignition type gas burner which may optionally change a direction of a tip of a nozzle unit and maintain the direction, comprising a burner body having a connection part which is connected with a liquefied gas cylinder; a cylindrical crater unit which has a jet port and an electrical discharge electrode part near a tip of the crater unit; and a bellows-like connection hose portion combined with a holder tube, which connects the burner body with the crater unit and may bend so as to change a direction of the jet port and maintain the direction.

Document US 4 954 078 discloses a spark igniter circuit provided for igniting a flammable gas mixture in devices such as gas torches, lanterns, stoves and the like. A piezoelectric spark generator imposes a voltage on an electrically conductive circuit which is discontinuous in two locations for creating a pair of spark gaps in the circuit.

Document EP 2 522 904 discloses a device having an injection unit i.e. gun, for producing a flow of a combustible gas mixture at a high speed, and a burner head in which the flow is ignited via a spark plug. An aluminum riser connects the gun and the burner head. The spark plug is positioned near the burner head and it's electrically connected to a lighter i.e. piezoelectric lighter. A transformer e.g. auto step-down transformer, reduces capacitive losses between the lighter and the spark plug, where the transformer is mounted in parallel with the lighter.

Document US 2008/171295 discloses a utility lighter including a handle casing, a gas releasing valve, a bendable extension arm, a torch nozzle, a piezoelectric unit and an actuation device. The piezoelectric unit is disposed within the handle casing and has a depressible part and a spark-generating element. The spark generating element comprises, in turn, a piezoelectricity conductor defining a piezoelectric route extended from the piezoelectric unit to a nozzle housing of the torch nozzle which is provided at the upper end of the extension arm.

Document US 2009/075221 discloses a burner for a gas burning hand tool comprising an elongated burner body, associated at opposite ends of the body with a gas injection zone and a burner body. Within the burner body there is provided a compression spring extended between a second shoulder of a socket of the burner body and a longitudinal recess provided in the interior of the burner body.

### Summary of the Invention

The technical problem at the basis of the present invention was to provide a portable gas tool to burn weeds from boulevards, terraces, walkways, to incinerate nests of insects, to defrost tubes and to carry out similar maintenance and gardening works, with characteristics such as to overcome one or more of the drawbacks mentioned above with reference to the known technique.

According to the invention, the aforesaid problem is solved by a portable gas tool comprising:
a tube for the passage of gas,
a tap adapted to be combined with a gas supply from a first side and with the aforesaid tube from a second side, to supply inflammable gas inside the aforesaid tube,
a handle grip combined with a first end portion of the aforesaid tube,
a burner combined with a second end portion of the aforesaid tube, and
a piezoelectric system comprising an ignition button, a spark plug on which the aforesaid ignition button operates and an electric cable with a first end combined with the aforesaid spark plug,
wherein the aforesaid ignition button and the aforesaid spark plug are placed at the aforesaid handle grip, and
wherein the aforesaid electric cable has a length inside the aforesaid tube, substantially extending from the aforesaid handle grip to the aforesaid burner.

Preferably, the aforesaid handle grip is provided with a housing seat which is engaged by the aforesaid spark plug.

Preferably, the aforesaid handle grip comprises a back portion and a front portion opposite each other, wherein the aforesaid housing seat is arranged at the aforesaid back portion, or wherein the aforesaid housing seat is arranged at the aforesaid front portion.

Preferably, the aforesaid ignition button operates directly on the aforesaid spark plug.

Preferably, the aforesaid tube has a side wall provided with a hole for the passage of the aforesaid electric cable.

According to the invention, the aforesaid portable gas tool comprises a supporting element for fixing the aforesaid electric cable inside the aforesaid tube.

The aforesaid supporting element is arranged at the aforesaid second end portion of the aforesaid tube.

Preferably, the aforesaid supporting element is a spring.

The aforesaid electric cable comprises a second end opposite the aforesaid first end, which is arranged outside of the aforesaid tube.

Preferably, the aforesaid electric cable comprises a first portion proximal to the aforesaid spark plug outside of the aforesaid tube.

### Brief description of the figures

Further characteristics and advantages of the invention will be better highlighted in the following detailed description of some preferred, but not exclusive, embodiments illustrated by way of example and without limitations, with the aid of the accompanying drawings, in which:
- figure 1 schematically shows a view from a first side, in longitudinal section along a median plane, of a portable gas tool essentially comprising a handle grip, a tap, a tube, a burner and a piezoelectric system according to the present invention;
- figure 2 shows a first enlarged particular of figure 1, specifically the aforesaid handle grip with the aforesaid tap and part of the aforesaid tube and of the aforesaid piezoelectric system;
- figure 3 shows a second enlarged particular of figure 1, specifically the aforesaid burner and part of the aforesaid tube and of the aforesaid piezoelectric system;
- figure 4 shows a third particular of figure 1, specifically the aforesaid tube and the aforesaid piezoelectric system;
- figures 5 and 6 show a particular of the tool of figure 1, specifically the aforesaid tube and the aforesaid piezoelectric system, according to a view from the aforesaid first side and respectively according to a view from a second side opposite the first side;
- figure 7 schematically shows a view from a first side, in a longitudinal section along a median plane, of a portable gas tool essentially comprising a handle grip, a tap, a tube, a burner and a piezoelectric system, according to an embodiment variant of the present invention;
- figure 8 shows a first enlarged particular of figure 7, specifically the aforesaid handle grip with the aforesaid tap and part of the aforesaid tube and of the aforesaid piezoelectric system;
- figure 9 shows a second enlarged particular of figure 7, specifically the aforesaid burner and part of the aforesaid tube and of the aforesaid piezoelectric system;
- figure 10 shows a third particular of figure 7, specifically the aforesaid tube and the aforesaid piezoelectric system;
- figures 11 and 12 show a particular of the tool of figure 7, specifically the aforesaid tube and the aforesaid piezoelectric system, according to a view from the aforesaid first side and respectively according to a view from a second side opposite the first side.

### Detailed description of the invention

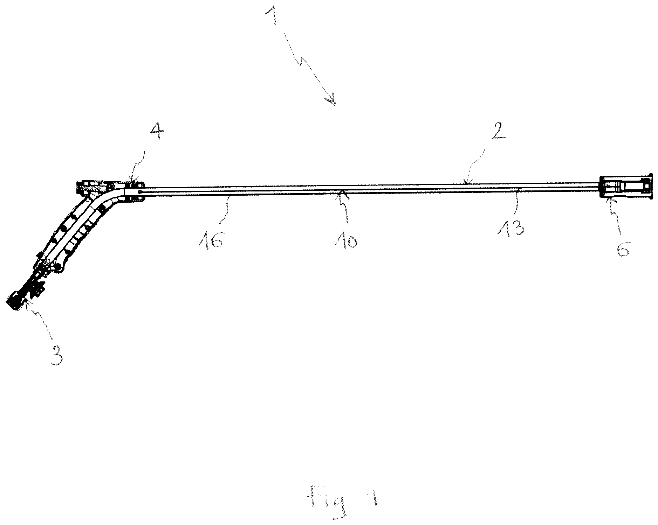

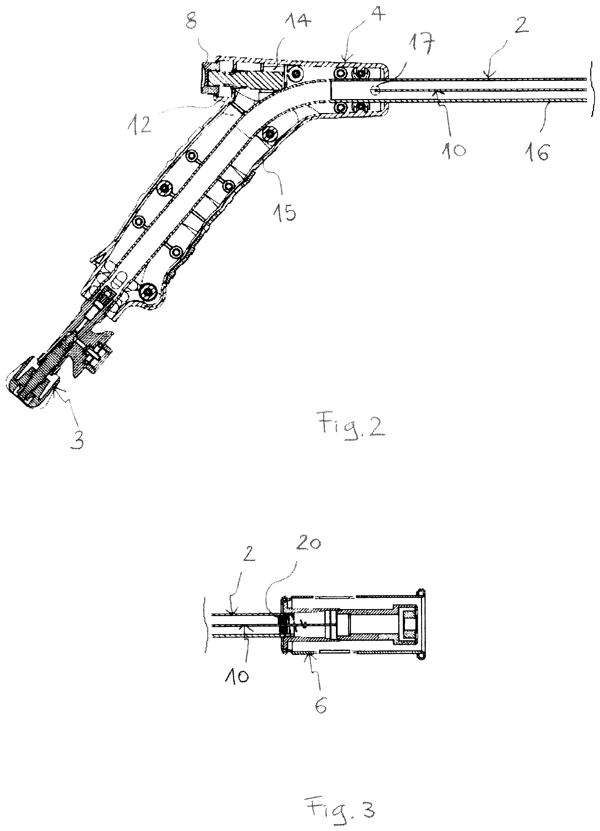

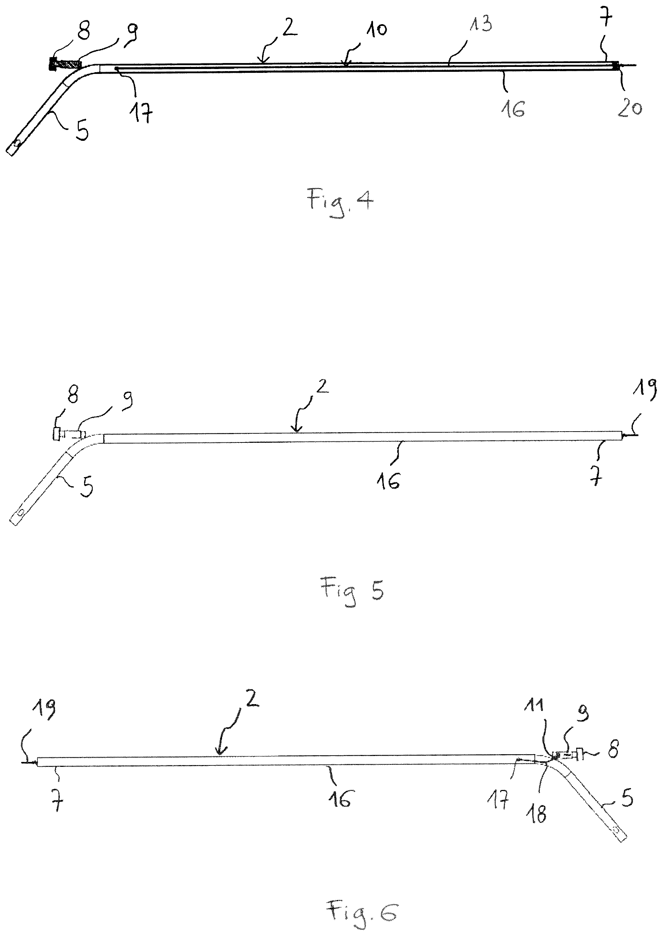

With reference to figures 1-6, 1 generally denotes a portable gas tool used to burn weeds from boulevards, terraces, walkways, to incinerate nests of insects, to defrost tubes and to carry out similar maintenance and gardening works, according to the present invention.

In the context of the present invention, portable gas tool means that the present tool is adapted to be supplied with a combustible gas, for example by means of a cylinder of the type commonly used in camping activities.

In the context of the present invention, the expressions "gas," "inflammable gas," "combustible gas," "combustible gas mixture" and "inflammable gas mixture" are equivalent.

The portable gas tool **1,** also simply identified as tool herein, essentially comprises a tube **2,** a tap **3** adapted to be combined with a gas supply from a first side, not shown in the examples of the figures, and with the tube **2** from a second side, to supply inflammable gas inside the tube **2,** a handle grip **4** combined with a first end portion **5** of the tube **2,** a burner **6** combined with a second end portion **7** of the tube **2** and a piezoelectric system.

The aforesaid piezoelectric system, of known type, comprises an ignition button **8,** a spark plug **9** on which the ignition button **8** is operable and an electric cable **10** with a first end **11** combined with the spark plug **9** and which, in a known way, allows a user, by acting on the ignition button **8,** to achieve the discharge of an electrical spark able to set the combustible gas on fire when the tap **3** is connected, in open position, to the aforesaid gas supply.

With regard to this, it should be said that the tap **3** is also of the known type and allows to regulate the gas flow inside the tube **2.**

In particular, the tap **3** can be regulated between a first position, in which it is closed and does not allow the passage of combustible gas inside the tube, and a second position in which is opening is maximum and allows the maximum supply of combustible gas inside the tube.

According to the invention, the ignition button **8** and the spark plug **9** are placed at the handle grip **4,** especially at a back portion **12** of the handle grip **4,** whereas the electric cable **10** comprises a length generally denoted by **13** inside the tube **2** which substantially extends from the handle grip **4** to the burner **6.**

This way, a user can easily ignite the portable gas tool according to the present invention with the same hand used to grasp the tool, advantageously with the thumb of such hand, without having to overcome any high resistance.

In detail, the tool **1** is provided with a housing seat **14** obtained in the handle grip **4** at the aforesaid back portion **12,** which is engaged by the spark plug **9,** the possibility to provide a housing seat for the spark plug arranged at a front portion **15** opposite the aforesaid back portion of the handle grip, not however being excluded, as will become clearer hereinafter.

According to the above, it should be added that the ignition button **8** is advantageously directly operable on the spark plug **9.**

As far as the tube **2** is concerned, it should be said that according to the examples of the aforesaid figures, it has a side wall **16** provided with a hole **17** for the passage of the electric cable **10,** whereas the latter comprises a first portion **18** proximal to the handle grip **4,** which is outside of the tube **2.**

Moreover, the electric cable **10** comprises, opposite the aforesaid first portion **18,** a second portion **19** also outside of the tube **2.** In other words, the electric cable **10** comprises a second end opposite the first end **11,** which protrudes from the tube **2.**

According to the examples of the figures, the tool **1** further comprises a supporting element **20** for fixing the electric cable **10** inside the tube **2,** which is arranged at the second end portion **7** of the tube **2.**

With regard to this, it should be said that, advantageously, the supporting element **20** preferably comprises, or is constituted by, a spring.

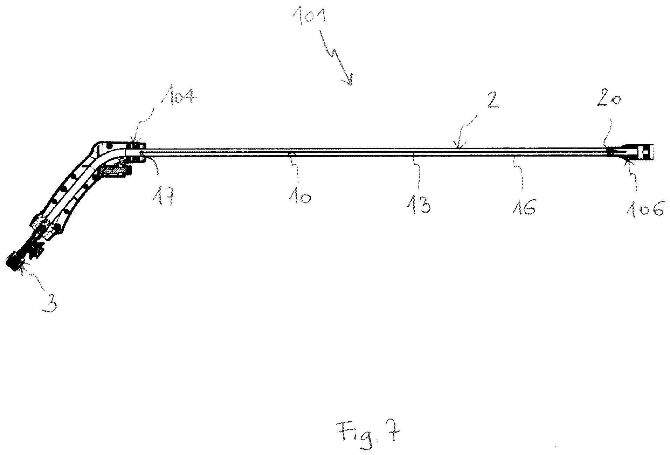

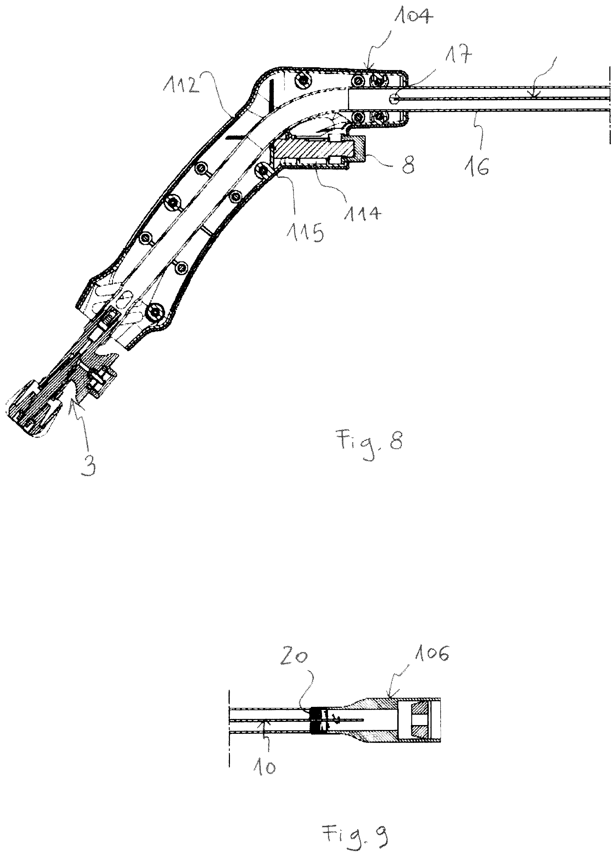

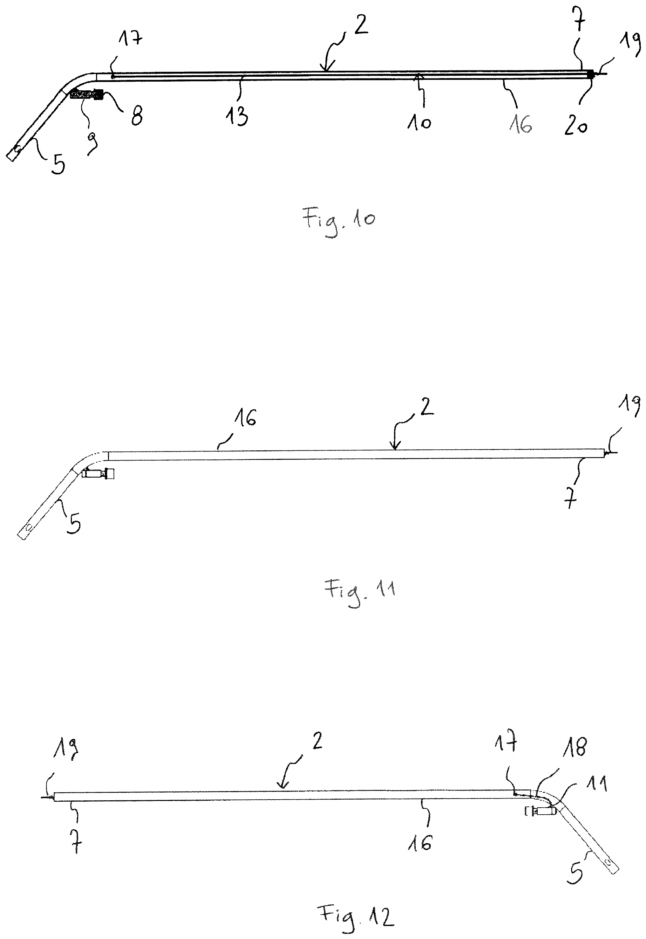

With reference to the example of figures 7-12, an embodiment variant of the present invention is now described, wherein parts structurally and functionally corresponding to those of the tool **1** described above have the same reference numbers as those used in the example of the figures 1-6.

In detail, the examples of figures 7-12 show a portable gas tool generally denoted by **101,** which is entirely similar to the tool **1** explained above and to which description reference is made, except for the fact of providing an ignition button **8** of the piezoelectric system arranged in a different position.

In particular, the tool **101** comprises a handle grip **104** with a back portion **112** and a front portion **115,** and the ignition button **8** is arranged at the front portion **115.**

According to the invention, a housing seat **114** is further provided at the front portion **115** of the handle grip **104** for a respective spark plug **9** of the piezoelectric system, also in this case of known type.

This way, a user can easily ignite the portable gas tool according to the present invention with the same hand used to grasp the tool, advantageously with the index finger of such hand, without having to overcome any high resistance.

According to the above, the tool **101** further comprises a tube **2** with a first end portion **5** combined with the handle grip **104,** a tap **3** combined with the tube **2,** a burner **106** also combined with the tube **2** at a second end portion **7** of the latter, an electric cable **10** with a first end **11** combined with the spark plug **9,** a length inside the tube **13,** a first portion **18** and an opposite second portion **19** which are outside of the tube **2,** and a supporting element **20** for fixing the electric cable, wherein the tube **2** comprises a side wall **16** provided with a hole **17** for the passage of the electric cable **10,** for which the description set forth above is valid and to which reference is made.

Thus, unless otherwise specified, what is set forth above with reference to the tool **1** is valid for the tool **101.**

The advantages of the present invention made clear in the description set forth above can be summarized by highlighting that a portable gas tool, especially economic, practical, comfortable and functional, as well as provided with a well appreciated aesthetic since only one so to say "clean" tube is visible, without head houses or sticks outside of the tube, is provided to burn weeks from boulevards, terraces, walkways, to incinerate nests of insects, to defrost tubes and to carry out similar maintenance and gardening works.

In order to meet contingent and specific requirements, several variations and modifications shall be made by a field technician to the present invention, in the illustrated and described embodiments thereof, provided that all are included in the scope of protection of the invention as defined by the following claims.

## Claims

1. Portable gas tool (1) comprising:
a tube (2) for the passage of gas,
a tap (3) adapted to be combined with a gas supply from a first side and with said tube (2) from a second side, to supply inflammable gas inside said tube (2),
a handle grip (4) combined with a first end portion (5) of said tube (2),
a burner (6) combined with a second end portion (7) of said tube (2), and
a piezoelectric system comprising an ignition button (8), a spark plug (9) and an electric cable (10) with a first end (11) combined with said spark plug (9),
wherein said ignition button (8) and said spark plug (9) are placed at said handle grip (4), and
wherein said electric cable (10) has a length inside said tube (13), substantially extending from said handle grip (4) to said burner (6), wherein said electric cable (10) comprises a second end opposite said first end (11) arranged outside of said tube (2),
**characterized in that** the tool comprises a supporting element (20) for fixing said electric cable (10) in said tube (2) and **in that** said supporting element (20) is arranged at said second end portion (7) of said tube (2).

2. Tool according to claim 1, wherein said handle grip (4) is provided with a housing seat (14) engaged by said spark plug (9).

3. Tool according to claim 2, wherein said handle grip (4) comprises a back portion (12) and a front portion (15) opposite each other, wherein said housing seat (14) is arranged at said back portion (12).

4. Tool according to claim 2, wherein said handle grip (4) comprises a back portion (12) and a front portion (15) opposite each other, wherein said housing seat (14) is arranged at said front portion (15).

5. Tool according to any one of the preceding claims, wherein said ignition button (8) operates directly on said spark plug.

6. Tool according to any one of the preceding claims, wherein said tube (2) has a side wall (16) provided with a hole (17) for the passage of said electric cable (10).

7. Tool according to any one of the preceding claims, wherein said supporting element (20) is a spring.

8. Tool according to any one of the preceding claims, wherein said electric cable (10) comprises a first portion (18) proximal to said spark plug (9) outside of said tube (2).

## Patentansprüche

1. Tragbares Gaswerkzeug (1) umfassend:
ein Rohr (2) für den Durchfluss von Gas,
einen Hahn (3), der geeignet ist, mit einer Gaszufuhr an einer ersten Seite und mit dem Rohr (2) an einer zweiten Seite kombiniert zu werden, um brennbares Gas in das Innere des Rohrs (2) zuzuführen,
einen Handgriff (4), der mit einem ersten Endabschnitt (5) des Rohrs (2) kombiniert ist,
einen Brenner (6), der mit einem zweiten Endabschnitt (7) des Rohrs (2) kombiniert ist, und
ein piezoelektrisches System, das einen Zündknopf (8), eine Zündkerze (9) und ein elektrisches Kabel (10) mit einem ersten Ende (11), das mit der Zündkerze (9) kombiniert ist, wobei der Zündknopf (8) und die Zündkerze (9) an dem Handgriff (4) angeordnet sind, und
wobei das elektrische Kabel (10) eine Länge innerhalb des Rohres (13) aufweist, die sich im Wesentlichen von dem Handgriff (4) zu dem Brenner (6) erstreckt, wobei das elektrische Kabel (10) ein dem ersten Ende (11) gegenüberliegendes zweites Ende aufweist, das außerhalb des Rohres (2) angeordnet ist,
**dadurch gekennzeichnet, dass** das Werkzeug ein Tragelement (20) zur Befestigung des elektrischen Kabels (10) in dem Rohr (2) umfasst und dass das Tragelement (20) an dem zweiten Endabschnitt (7) des Rohrs (2) angeordnet ist.

2. Werkzeug nach Anspruch 1, wobei der Handgriff (4) mit einem Aufnahmesitz (14) versehen ist, der von der Zündkerze (9) in Eingriff genommen wird.

3. Werkzeug nach Anspruch 2, wobei der Handgriff (4) einen hinteren Abschnitt (12) und einen vorderen Abschnitt (15) aufweist, die einander gegenüberliegen, wobei der Aufnahmesitz (14) an dem hinteren Abschnitt (12) angeordnet ist.

4. Werkzeug nach Anspruch 2, wobei der Handgriff (4) einen hinteren Abschnitt (12) und einen vorderen Abschnitt (15) umfasst, die einander gegenüberliegen, wobei der Aufnahmesitz (14) an dem vorderen Abschnitt (15) angeordnet ist.

5. Werkzeug nach einem der vorhergehenden Ansprüche, wobei der Zündknopf (8) direkt auf die Zündkerze wirkt.

6. Werkzeug nach einem der vorhergehenden Ansprüche, wobei das Rohr (2) eine Seitenwand (16) aufweist, die mit einem Loch (17) für den Durchgang des elektrischen Kabels (10) versehen ist.

7. Werkzeug nach einem der vorangehenden Ansprüche, wobei das Tragelement (20) eine Feder ist.

8. Werkzeug nach einem der vorhergehenden Ansprüche, wobei das elektrische Kabel (10) einen proximal zur Zündkerze (9) außerhalb des Rohrs (2) angeordneten ersten Abschnitt (18) aufweist.

## Revendications

1. Outil à gaz portable (1) comprenant:
un tube (2) pour le passage du gaz,
un robinet (3) adapté pour être associé à une alimentation en gaz d'un premier côté et audit tube (2) d'un second côté, afin de fournir un gaz inflammable à l'intérieur dudit tube (2),
une poignée (4) associée à une première portion d'extrémité (5) dudit tube (2),
un brûleur (6) associé à une seconde portion d'extrémité (7) dudit tube (2), et
un système piézoélectrique comprenant un bouton d'allumage (8), une bougie d'allumage (9) et un câble électrique (10) avec une première extrémité (11) associée à ladite bougie d'allumage (9), dans lequel ledit bouton d'allumage (8) et ladite bougie d'allumage (9) sont placés en correspondance de ladite poignée (4), et
dans lequel ledit câble électrique (10) présente une longueur à l'intérieur dudit tube (13) s'étendant sensiblement de ladite poignée (4) audit brûleur (6), dans lequel ledit câble électrique (10) comprend une seconde extrémité opposée à ladite première extrémité (11) disposée à l'extérieur dudit tube (2),
**caractérisé en ce que** l'outil comprend un élément de support (20) pour fixer ledit câble électrique (10) dans ledit tube (2) et **en ce que** ledit élément de support (20) est disposé en correspondance de ladite seconde portion d'extrémité (7) dudit tube (2).

2. Outil selon la revendication 1, dans lequel la poignée (4) est prévue d'un siège de logement (14) engagé par ladite bougie d'allumage (9).

3. Outil selon la revendication 2, dans lequel la poignée (4) comprend une portion postérieure (12) et une portion antérieure (15) opposées entre elles, dans lequel ledit siège de logement (14) est disposé en correspondance de ladite portion postérieure (12).

4. Outil selon la revendication 2, dans lequel la poignée (4) comprend une portion postérieure (12) et une portion antérieure (15) opposées entre elles, dans lequel ledit siège de logement (14) est disposé en correspondance de ladite portion antérieure (15).

5. Outil selon l'une quelconque des revendications précédentes, dans lequel ledit bouton d'allumage (8) agit directement sur ladite bougie d'allumage.

6. Outil selon l'une quelconque des revendications précédentes, dans lequel ledit tube (2) présente une paroi latérale (16) pourvue d'un trou (17) pour le passage dudit câble électrique (10).

7. Outil selon l'une quelconque des revendications précédentes, dans lequel ledit élément de support (20) est un ressort.

8. Outil selon l'une quelconque des revendications précédentes, dans lequel ledit câble électrique (10) comprend une première portion (18) proximale à ladite bougie d'allumage (9) à l'extérieur dudit tube (2).
